# EUROPEAN PATENT APPLICATION

(11) **EP 4 693 506 A1**
(43) Date of publication of application: **11.02.2026**
(21) Application number: 24779637.8
(22) Date of filing: 18.03.2024
(51) Int. Cl.: H01M 4/62, C08L 101/00, H01M 4/139, H01M 50/403

(54) **BINDER PACKAGE**

(30) Priority: 31.03.2023 JP 2023058825
(71) Applicant: Zeon Corporation, Tokyo 100-8246 (JP)
(72) Inventor: UMESATO, Toshiyuki, Tokyo 100-8246 (JP)
(74) Representative: Maiwald GmbH
(86) International application number: PCT/JP2024/010451
(87) International publication number: WO 2024/203512

(57) **Abstract**

A packaged binder product including a container, and a binder composition for secondary battery accommodated in an internal space of the container, wherein: the container includes an accommodation part, a liquid feeding adapter, a liquid feeding pipe, and a cap body; the liquid feeding adapter is disposed to engage with the opening of the accommodation part; the liquid feeding pipe has a top-portion side end that engages with the liquid feeding adaptor; the liquid feeding adaptor and liquid feeding pipe constitute a liquid delivery path that allows opening on the bottom-portion side end of the liquid feeding pipe to communicate with a top-portion side of the container; the cap body is disposed to detachably engage with the liquid feeding adapter to seal liquid delivery path; and contact angle θB between the binder composition and an inner wall surface of the container is equal to or greater than 30°.

## Description

### Field

The present invention relates to a packaged product of a binder for secondary batteries, and specifically, relates to a packaged product in which a binder for secondary batteries is packaged in a state suitable for storing and use thereof.

### Background

A binder is used as a material for producing batteries such as lithium ion secondary batteries. The binder may be used as a material for bonding active material particles that constitute an electrode in electrodes (positive electrode or negative electrode) of a battery and also as a material for bonding layered structures such as electrodes and a separator to each other.

In many cases, such a binder is prepared as a binder composition that is in a liquid state, such as a slurry, and that includes a fine particulate polymer that functions as a binder and a dispersion medium. The prepared binder composition may be used immediately after preparation in some cases. However, the prepared binder composition is often placed in a container to form a packaged product, which is stored until the time of use.

Since the binder is a material constituting the internal structure of the battery, the quality thereof can greatly affect the performance of the battery. In particular, in the case of secondary batteries such as lithium ion secondary batteries, there is a demand for an enhancement of the performance for smooth charging and discharging, and thus there is a demand for high quality of the binder for that purpose. Accordingly, it is desired that the packaged product of the binder composition is capable of preserving the binder composition without deterioration in its quality. Various types of packaged product of binder compositions have been proposed (for example, Patent Literatures 1 to 3).

### Citation List

### Patent Literature

Patent Literature 1: Japanese Patent Application Laid-Open No. 2011-098736 A
Patent Literature 2: International Publication No. 2022/071523 (corresponding publication: U.S. patent application publication No. 2023/331976 specification)
Patent Literature 3: International Publication No. 2015/029835

### Summary

### Technical Problem

In comparison to a case where the binder composition for a secondary battery is prepared at the time of use and used immediately, when a battery is produced using a binder composition for a secondary battery that has been stored after its preparation, problems such as defects in coating of the binder composition and deterioration in the performance of batteries may occur. The occurrence of such defects is thought to be caused by deterioration, due to storing, in the quality of the binder composition, and the packaged product of the binder composition in the conventional art failed to sufficiently suppress such deterioration in the quality.

Therefore, an object of the present invention is to provide a packaged product of a binder composition that is capable of suppressing deterioration in the quality of the binder composition due to storing, from which the binder composition can be easily taken out at the time of use, and that is capable of effectively suppressing occurrence of defects in the resulting battery.

### Solution to Problem

The present inventor has conducted various studies to solve the above-mentioned problems. In the course of the studies, the present inventor has found that deterioration in the quality of the binder composition can be greatly affected by incorporation of coarse particles from its environment when the binder composition is fed from a container to a coating device, and also by formation of aggregates due to evaporation of a dispersion medium and contact of the binder composition with the inner wall of the container while the binder composition is stored in the container. The present inventor has further found that formation of particulate components such as the coarse particles and aggregates due to these causes can be effectively suppressed when a specific packaged product is adopted as the packaged product of the binder composition. Thus, the present invention has been completed.

That is, the present invention provides the following.

(1) A packaged binder product comprising a container, and a binder composition for a secondary battery accommodated in an internal space of the container, wherein:
   the container includes an accommodation part, a liquid feeding adapter, a liquid feeding pipe, and a cap body;
   the accommodation part has an opening at a top portion thereof;
   the liquid feeding adapter is disposed to engage with the opening of the accommodation part;
   the liquid feeding pipe has a bottom-portion side end that is in a proximity of a bottom of the internal space of the container, and a top-portion side end that engages with the liquid feeding adaptor;
   the liquid feeding adaptor and the liquid feeding pipe constitute a liquid delivery path that allows opening on the bottom-portion side end of the liquid feeding pipe to communicate with a top-portion side of the container;
   the cap body is disposed to detachably engage with the liquid feeding adapter to seal the liquid delivery path; and
   a contact angle θ_{B} between the binder composition and an inner wall surface of the container is equal to or greater than 30°.
(2) The packaged binder product according to (1), wherein the liquid feeding adapter includes an engagement portion that is capable of being connected to a connector configured for delivering the binder composition to outside of the container.
(3) The packaged binder product according to (1) or (2), wherein the binder composition includes a particulate polymer having a glass transition temperature of 40°C or higher and 200°C or lower.
(4) The packaged binder product according to (1) or (2), wherein the binder composition includes a particulate polymer that has a core-shell structure including a core portion and a shell portion covering an outer surface of the core portion, and the shell portion has a glass transition temperature of 40°C or higher and 200°C or lower.
(5) The packaged binder product according to (4), wherein the binder composition further includes an auxiliary particulate polymer that is a non-core-shell particulate polymer, and a content of the auxiliary particulate polymer is 5% by weight or less relative to 100% by weight of the binder composition.
(6) The packaged binder product according to (1) or (2), wherein the binder composition includes a particulate polymer that is composed of only a particulate polymer having a core-shell structure including a core portion and a shell portion covering an outer surface of the core portion.
(7) The packaged binder product according to any one of (1) to (6), wherein the binder composition includes a particulate polymer, an anti-drying agent, and water, and a contact angle θ_{W} between an inner wall surface of the container and water is 80° or more.
(8) The packaged binder product according to any one of (1) to (7), wherein a concentration of particulate components in the binder composition contained in the packaged binder product stored at 5°C or higher and 40°C or lower for 6 months is 1000 ppm or lower, the particulate components having a spherical volume equivalent diameter of 5 µm or more.

### Advantageous Effects of Invention

According to the present invention, there is provided a packaged product of a binder composition that is capable of suppressing deterioration in the quality of the binder composition due to storing, from which the binder composition can be easily taken out at the time of use, and that is capable of effectively suppressing occurrence of a defect in the resulting battery.

### Brief Description of Drawings

FIG. 1 is a vertical sectional view schematically illustrating an example of a packaged binder product of the present invention and a container that is a component thereof.
FIG. 2 is a partial vertical sectional view schematically illustrating an example of a state in which a liquid feeding adapter and a connector are connected for delivering a binder composition from the packaged binder product of the present invention.

### Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents. Components of the embodiments described below may be appropriately combined. In the drawings, the same components may be denoted by the same reference numerals, and their descriptions may be omitted.

In the following description, a "long-length" substrate refers to a substrate with the length that is 5 times or more the width thereof, and preferably a substrate with the length that is 10 times or more the width thereof, and specifically refers to a substrate with a length that allows the substrate to be wound up into a rolled shape for storage or transportation. The upper limit of the length of a substrate relative to the width of the substrate may be, but not particularly limited to, for example, 100,000 times or less the width.

### (Packaged binder product: Container shape)

The packaged binder product of the present invention includes a container and a binder composition for a secondary battery accommodated in an internal space of the container.

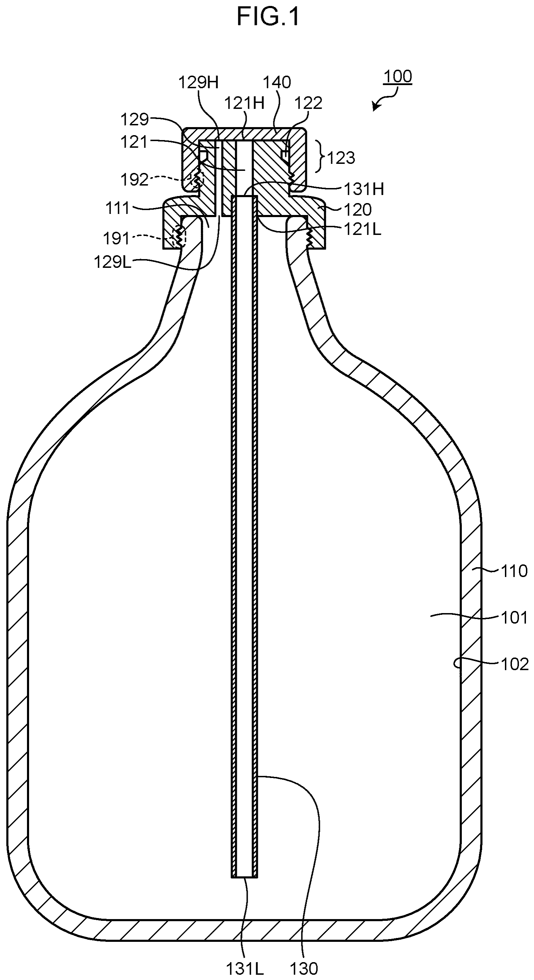

FIG. 1 is a vertical sectional view schematically illustrating an example of a packaged binder product of the present invention and a container as a component thereof. In FIG. 1, the container 100 includes an accommodation part 110, a liquid feeding adapter 120, a liquid feeding pipe 130, and a cap body 140. The accommodation part 110 has an opening 111 at a top portion thereof.

The liquid feeding adapter 120 is disposed to engage with the opening 111 of the accommodation part 110. In this example, engagement between the liquid feeding adapter 120 and the accommodation part 110 is achieved at a threaded portion 191 where a male screw located near the opening 111 of the accommodation part 110 is engaged with a female screw that is a corresponding portion of the liquid feeding adapter 120 by screwing them each other.

In the present application, the engagement of members constituting the container may be a sealed engagement that can block the inflow and outflow of a liquid at the engagement portion. For example, the engagement of the accommodation part 110 with the liquid feeding adapter 120, the engagement of the liquid feeding adapter 120 with the liquid feeding pipe 130, the detachable engagement of the liquid feeding adapter 120 with the cap body 140, and the engagement of the liquid feeding adapter 120 with a connector (to be described below) can be achieved using a sealed engagement that can block the inflow and outflow of a liquid at the engagement portion. The engagement that is not limited to a detachable engagement may be a detachable engagement, and may also be a non-detachable engagement. Engagement of a plurality of members may be mechanical engagement such as screwing, and may also be an integration achieved by bonding or the like of the plurality of members.

The liquid feeding adapter 120 has a through hole 121. The through hole 121 is a hole forming communication from a bottom-portion side opening 121L to a top-portion opening 121H. The bottom-portion side opening 121L opens toward a container internal space 101, and the top-portion opening 121H opens toward the container outer side.

The liquid feeding pipe 130 is a hollow pipe having openings at both ends. A bottom-portion side end 131L, which is one end of the liquid feeding pipe 130, is in a proximity of the bottom of the internal space 101 of the container 100. A top-portion side end 131H, which is the other end of the liquid feeding pipe 130, engages with the bottom-portion side opening 121L of the liquid feeding adaptor. Thus, the liquid feeding adaptor 120 and the liquid feeding pipe 130 constitute a liquid delivery path that allows the opening on the bottom-portion side end 131L of the liquid feeding pipe to communicate with the outside of the container.

The liquid feeding adapter 120 further includes a gas supply hole 129 formed separately from the through hole 121. The gas supply hole 129 is a hole forming communication from a bottom-portion side opening 129L to a top-portion side opening 129H.

The liquid feeding adapter 120 further has a connector engagement portion 123 including a recess 122 near the top-portion side thereof. The connector engagement portion 123 functions upon engaging the liquid feeding adapter 120 with the connector (to be described later).

The cap body 140 is disposed to detachably engage with the liquid feeding adapter 120. In this example, detachable engagement between the cap body 140 and the liquid feeding adapter 120 is achieved at a threaded portion 192 where a male screw located near the top portion of the liquid feeding adapter 120 is engaged with a female screw that is the corresponding portion of the cap body 140 by screwing them to each other. With such engagement, the cap body 140 seals the liquid delivery path at its top-portion side opening (in this example, at the top-portion opening 121H of the liquid feeding adaptor 120). In addition, with such engagement, the cap body 140 also seals the top-portion opening 129H of the gas supply hole 129.

As the container 100 of the example in FIG. 1 has such a structure, the container can make the internal space 101 airtight. Therefore, the binder composition for a secondary battery, which is a liquid, can be stored in the container 100 to constitute the packaged binder product of the present invention.

Upon delivering the binder composition from the packaged binder product of the present invention for use of the binder composition, the cap body is removed from the liquid feeding adapter and the connector is connected to the liquid feeding adaptor.

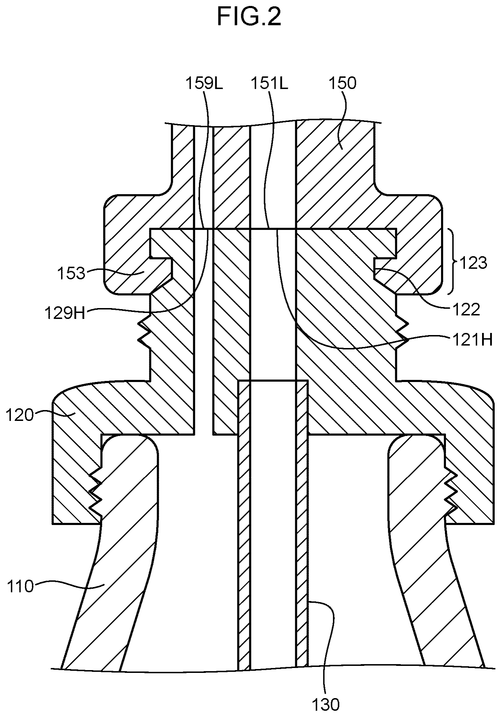

FIG. 2 is a partial vertical sectional view schematically illustrating an example of a state in which the liquid feeding adapter and the connector are connected for delivering the binder composition from the packaged binder product of the present invention. FIG. 2 shows a state in which the cap body 140 has been removed from the liquid feeding adapter 120 of the container 100 of the packaged binder product, and then the connector 150 is connected to the liquid feeding adapter 120. The connector 150 has a connection portion 153 that has a shape to fit to the recess 122 in the connector engagement portion 123 of the liquid feeding adaptor 120, and thus can be easily connected by plugging the connector 150 to the liquid feeding adaptor 120. In this example, the connector 150 has an opening 151L that opens at a position corresponding to the top-portion opening 121H of the through hole 121, so that the binder composition flowing out of the liquid delivery path of the container 100 can be received and led to the device for use of the binder composition. In this example, the delivery may be performed by sucking the binder composition by a pump from upstream of the connector 150.

When, as described above, the container includes the liquid feeding adapter engaged with the opening of the accommodation part, and further includes the liquid feeding pipe to be engaged with the liquid feeding adapter, wherein the bottom-portion side end of the liquid feeding pipe is located in a proximity of the bottom portion of the internal space of the container and the top-portion side end engages with the liquid feeding adapter, the binder composition that remains at the bottom portion of the container can be easily delivered to the outside of the container upon using the binder composition. Connection to the connector for such delivery can be easily achieved by opening only the small opening of the top portion of the liquid feeding adapter and immediately closing it with the connector, without opening the opening of the accommodation part. Therefore, contamination of coarse particles from the environment when the binder composition is fed from the container to the coating apparatus can be easily and remarkably reduced. Therefore, by adopting such a mechanism, compared to the conventional mechanism in which the opening of the container is opened and the liquid feeding pipe is inserted into the opening from the outside to perform the delivery, it is possible to obtain advantageous effects in terms of convenience of the binder composition extraction, and also in terms of suppression of deterioration in the quality of the binder composition.

In addition, the connector 150 has an opening 159L at a position corresponding to the top-portion opening 129H of the gas supply hole 129. As a result, a gas can be introduced into the container 100 from the opening 159L of the connector 150. The gas introduced into the container 100 from the opening 159L may be a gas having a low concentration of coarse particles from environment. For example, a gas obtained by filtering outside air through a filter or a gas having a low concentration of coarse particles stored in advance in a tank may be used. The gas having a reduced concentration of coarse particles may be a gas containing no coarse particles or a gas having an amount of coarse particles of 3000 particles per m³ or less, which are captured by a mesh-filter having an opening of 5 µm.

### (Contact angle)

In the packaged binder product of the present invention, a contact angle θ_{B} between the binder composition and the inner wall surface of the container is equal to or greater than a specific value. The contact angle θ_{B} is 30° or larger, preferably 60° or larger. The upper limit of the contact angle θ_{B} is not particularly limited, and may be less than 180°.

According to the present inventor's finding, deterioration in the quality of the binder composition during storing of the packaged binder product can be significantly suppressed by having a particular contact angle θ_{B} formed by the binder composition and the inner wall surface. Without being bound by any particular theory, it is believed that such an effect is due to suppression of aggregation of dispersed substances in the binder composition at the inner wall surface of the container. That is, during storing of the packaged binder product, the binder composition is stored in the internal space of the container at a position lower than a certain liquid surface level. Part of such a binder composition may adhere to the inner wall surface of the container at a position higher than the liquid surface due to a phenomenon such as fluctuation of the container. When the contact angle θ_{B} is small, the binder composition adhering to the inner wall surface of the container may remain adhering for a long period of time, and the dispersion medium may partially volatilize. As a result, the concentration of the dispersed substances (fine particulate polymer and the like) in the binder composition may locally increase. In this case, aggregation of the dispersed substances in the binder composition easily occurs, resulting in aggregate particles. Herein, it is considered that a contact angle θ_{B} at a specifically high level may suppress aggregation of such dispersed substances, thereby suppressing the formation of aggregate particles.

In addition, it is considered that the inner wall surface of the container and the binder composition interact with each other at a position lower than the liquid level of the stored binder composition, and thereby dispersion of the dispersed substances may be destabilized to cause occurrence of aggregation of the dispersed substances. It is considered that such a destabilization state is suppressed by the contact angle θ_{B} at a specifically high level, and formation of coarse molecules due to aggregation is suppressed.

Referring again to the example of FIG. 1, in the container 100, the binder composition is stored in contact with the inner wall surface 102 of the accommodation part 100, and therefore the contact angle between the inner wall surface 102 of the accommodation part 100 and the binder composition is set to a value equal to or larger than a specific value. Such a contact angle may be obtained by appropriately selecting a material for the accommodation part 100 that provides such a contact angle in relation to the binder composition. Specifically, when a binder composition containing water as the main dispersion medium thereof is used, preferable examples of the material constituting the accommodation part 100 may include materials such as high-density polyethylene (HDPE), polyethylene, polypropylene, polyethylene terephthalate, polyamide, polyester, and polyvinyl alcohol.

The contact angle θ_{B} may also be changed by appropriately adjusting the components of the binder composition and the ratio thereof. For example, the contact angle θ_{B} may be adjusted by appropriately adjusting the ratio of the components such as the dispersant contained in the binder composition.

In the packaged binder product of the present invention, the contact angle θ_{W} between water and the inner wall surface of the container is preferably equal to or greater than a specific value. Such a contact angle θ_{W} is preferably 80° or more, more preferably 100° or more. The upper limit of the contact angle θ_{W} is not particularly limited and may be less than 180°. As the binder composition, various types of binder compositions that are described as an aqueous binder composition (that is, a binder composition containing water as a dispersion medium) are known, and when such a contact angle θ_{W} is achieved, a packaged binder product that can provide the advantageous effects of the present invention in common containers can be obtained in any of various aqueous binder compositions.

### (Binder composition)

The binder composition packaged as a component of the packaged binder product of the present invention will be described below.

The binder composition is used as a material for use in producing a secondary battery such as a lithium ion secondary battery. The binder composition may include a particulate polymer and a dispersion medium. The dispersion medium preferably contains water from the viewpoint of easy handling and reduction of environmental load. Furthermore, from the viewpoint of reducing formation of aggregate particles, the binder composition preferably contains an anti-drying agent.

In a preferable embodiment, the binder composition includes a particulate polymer, an anti-drying agent, and water, and the binder composition may exhibit a contact angle θ_{W} of 80° or greater relative to the container. By adopting such a configuration, the ease of handling of the binder composition can be enhanced and the environmental load in use of the binder composition can be reduced. Furthermore, formation of aggregate particles can be reduced and the performance of the battery obtained using the binder composition can be enhanced.

In a preferable example, the binder composition may be a coating liquid for use in coating by an inkjet method. In the case of an ink jet coating liquid, problems such as clogging of nozzles due to particulate components such as coarse particles and aggregate particles contained in the coating liquid are problematic. The binder composition stored as the packaged binder product of the present invention can reduce such problems and is therefore particularly preferable.

In the present application, the particulate component in the binder composition may be defined as a particulate component having a spherical volume equivalent diameter of 5 µm or more. The concentration of such particulate components in the binder composition may be measured by filtering the binder composition through a nylon mesh filter with an opening of 5 µm and weighing collected substances on the filter. Such particulate components include particles formed by aggregation of the dispersed substances in the binder composition and foreign matters contaminated from the external environment during handling of the binder composition. Therefore, in the present application, a particulate component having a spherical volume equivalent diameter of 5 µm or more may be simply referred to as a "particulate component", and a particulate polymer or the like contained as a component of the binder composition is not included in the category of "particulate component".

### (Binder composition: Particulate polymer)

The particulate polymer can function, in the electrode (positive electrode or negative electrode) of the battery, as a material for bonding the active material particles that constitute the electrode and also as a material for bonding layered structures such as the electrodes and the separator to each other. The binder composition may include only one type of particulate polymer, or may include two or more types of particulate polymer.

The content percentage of the particulate polymer in the binder composition is preferably 1% by weight or more, and more preferably 3% by weight or more, and is preferably 15% by weight or less relative to the entire binder composition.

When the content percentage of the particulate polymer is equal to or more than the above-mentioned lower limit, adhesion properties between the electrode members of the secondary battery can be improved. On the other hand, when the content percentage of the particulate polymer is equal to or less than the above-mentioned upper limit, inkjet discharging characteristics can be improved.

The particulate polymer preferably contains a polymer having a glass transition temperature of 40°C or higher. When the particulate polymer contains a polymer having a glass transition temperature of 40°C or higher, inkjet discharging characteristics can be improved. In addition, when the glass transition temperature of the particulate polymer is at a certain level or higher, formation of aggregates inside the container can be suppressed. As a result, the above-described effect obtained when the contact angle θ_{B} falls within a specific range can be further enhanced. It is preferable that at least a part of the surface of the particulate polymer is composed of the polymer described above.

Herein, the glass transition temperature of the above-mentioned polymer is preferably 50°C or higher, and more preferably 80°C or higher, and is preferably 200°C or lower, and more preferably 120°C or lower.

When the glass transition temperature of the above-mentioned polymer is equal to or higher than the above-mentioned lower limit, inkjet discharging characteristics can be further improved. On the other hand, when the glass transition temperature of the above-mentioned polymer is equal to or lower than the above-mentioned upper limit, the particulate polymer can have an appropriate level of softness, and thereby an adhesive layer that bonds the battery members to each other more firmly can be formed even by pressurization at room temperature.

The glass transition temperature of the above-mentioned polymer can be adjusted, for example, by changing the type and percentage of monomers for use in preparing the polymer.

The volume-average particle diameter of the particulate polymer is preferably 100 nm or more, more preferably 200 nm or more, and still more preferably 400 nm or more, and still more preferably 500 nm or more, and is preferably 1500 nm or less, more preferably 900 nm or less, still more preferably 800 nm or less, and still further preferably 700 nm or less.

When the volume-average particle diameter of the particulate polymer falls within the above-mentioned range, aggregation of the particulate polymer can be effectively suppressed, and the performance of the secondary battery obtained using the binder composition can be enhanced. In addition, when the volume average particle diameter of the particulate polymer is equal to or larger than the above-mentioned lower limit, deterioration of battery characteristics due to an increase in resistance of the secondary battery caused by inhibition of the path of the electrodes or the separator can be suppressed. On the other hand, when the volume-average particle diameter of the particulate polymer is equal to or smaller than the above-mentioned upper limit, clogging of the nozzle when the binder composition is applied by the inkjet method can be further suppressed, and inkjet discharging characteristics can be improved.

In the present specification, the "volume-average particle diameter" represents a particle diameter at which the cumulative volume calculated from the small diameter side becomes 50% in the volume-based particle diameter distribution measured using a laser diffraction method, and may be measured using the measurement method described in Examples of the present specification.

The particulate polymer may be a particle composed of a single polymer, or may be a particle composed of a plurality of polymers combined (particles formed by physical or chemical bonding of two or more polymers). In particular, from the viewpoint of being capable of exhibiting a plurality of characteristics, the particulate polymer is preferably a particle composed of a plurality of polymers combined, and is more preferably a particle having a core-shell structure including a core portion and a shell portion covering at least a part of the outer surface of the core portion; a particle having a side-by-side structure in which two or more polymers are juxtaposed; a particle having a structure in which part of the polymer at the center portion is exposed to the outer shell portion; or a particle having a structure in which, on a surface of a spherical polymer particle, another type of polymer particles are embedded and integrated. Further preferable is a particle having a core-shell structure. By adopting a particulate polymer having a core-shell structure, both high adhesion performance and dispersion stability can be achieved, which is particularly preferable.

Hereinafter, a particulate polymer having a core-shell structure will be described as an example.

### (Particulate polymer having core-shell structure)

The particulate polymer having a core-shell structure has a core-shell structure including a core portion and a shell portion covering the outer surface of the core portion. By using the particulate polymer having a core-shell structure, inkjet discharging characteristics can be improved.

Herein, the shell portion may cover the entire outer surface of the core portion or may partially cover the outer surface of the core portion. Even if the outer surface of the core portion appears to be completely covered by the shell portion in appearance, the shell portion is considered as a shell portion that partially covers the outer surface of the core portion as long as a hole communicating the inside and outside of the shell portion is formed.

The particulate polymer may include any optional component other than the core portion and the shell portion described above, as long as the desired effects are not significantly impaired. Specifically, for example, the particulate polymer may have a portion, inside the core portion, formed of a polymer different from that of the core portion. As a specific example, seed particles that has been used in a case where the particulate polymer is produced by a seed polymerization method may remain in the core portion. However, from the viewpoint of remarkably exhibiting the desired effect, the particulate polymer preferably includes only the core portion and the shell portion.

### (Core portion)

The glass transition temperature of the polymer of the core portion of the particulate polymer is preferably -50°C or higher, and more preferably -45°C or higher, and is preferably 60°C or lower, more preferably 35°C or lower, still more preferably 0°C or lower, and even more preferably -15°C or lower.

When the glass transition temperature of the polymer of the core portion is equal to or higher than the above-mentioned lower limit, inkjet discharging characteristics can be improved. On the other hand, when the glass transition temperature of the polymer of the core portion is equal to or lower than the above-mentioned upper limit, the polymer of the core portion can exhibit good adhesion properties, and an adhesive layer that bonds the battery members to each other more firmly can be formed even by pressurization at room temperature. In addition, when the glass transition temperature of the polymer of the core portion is equal to or lower than the above-mentioned upper limit, falling of the components contained in the adhesive layer (so-called powder falling) can be sufficiently suppressed.

The glass transition temperature of the polymer of the core portion can be adjusted, for example, by changing the type and percentage of the monomers for use in preparing the polymer of the core portion.

Examples of the monomer for use in preparing the polymer of the core portion may include a vinyl chloride-based monomer such as vinyl chloride and vinylidene chloride; a vinyl acetate-based monomer such as vinyl acetate; an aromatic vinyl monomer such as styrene, α-methylstyrene, styrene sulfonic acid, butoxystyrene, and vinylnaphthalene; a vinyl amine monomer such as vinyl amine; a vinyl amide-based monomer such as N-vinyl formamide and N-vinyl acetamide; a fluorine-free (meth)acrylic acid ester monomer such as methyl acrylate, ethyl acrylate, butyl acrylate, 2-ethylhexyl acrylate, methyl methacrylate, ethyl methacrylate, butyl methacrylate, and cyclohexyl methacrylate; a (meth)acrylamide monomer such as acrylamide and methacrylamide; a (meth)acrylonitrile monomer such as acrylonitrile and methacrylonitrile; a fluorine-containing (meth)acrylic acid ester monomer such as 2-(perfluorohexyl)ethyl methacrylate and 2-(perfluorobutyl)ethyl acrylate; maleimide; and a maleimide derivative such as phenylmaleimide. As these monomers, one type thereof may be solely used, and two or more types thereof may also be used in combination at any ratio.

In the present invention, (meth)acryl means acryl and/or methacryl, and (meth)acrylonitrile means acrylonitrile and/or methacrylonitrile.

It is preferable that, among these monomers, a (meth)acrylic acid ester monomer is requisitely used as the monomer for use in preparing the polymer of the core portion from the viewpoint of more firmly bonding the battery members to each other via the adhesive layer. A combination of a (meth)acrylic acid ester monomer and an aromatic vinyl monomer or a combination of a (meth)acrylic acid ester monomer and a (meth)acrylonitrile monomer is more preferably used. That is, it is preferable that the polymer of the core portion requisitely contains a (meth)acrylic acid ester monomer unit, and more preferably contains a (meth)acrylic acid ester monomer unit, and an aromatic vinyl monomer unit or a (meth)acrylonitrile monomer unit.

In the present invention, "containing a monomer unit" means "containing a repeating unit derived from a monomer in a polymer obtained by using the monomer".

In the present invention, the term "(meth)acrylic acid ester monomer" refers to a monofunctional (meth)acrylic acid ester monomer having only one polymerization reactive group.

The proportion of the (meth)acrylic acid ester monomer unit in the polymer of the core portion is preferably 5% by weight or more, more preferably 10% by weight or more, and particularly preferably 20% by weight or more, and is preferably 98% by weight or less, and more preferably 96% by weight or less, relative to 100% by weight of the total repeating units (total monomer units) in the particulate polymer, from the viewpoint of more firmly bonding the battery members to each other via the adhesive layer.

When the polymer of the core portion contains a (meth)acrylic acid ester monomer unit and an aromatic vinyl monomer unit, from the viewpoint of more firmly bonding the battery members to each other via the adhesive layer, the proportion of the (meth) acrylic ester monomer unit in the polymer of the core portion is preferably 5% by weight or more, more preferably 10% by weight or more, and particularly preferably 20% by weight or more, and is preferably 80% by weight or less, more preferably 75% by weight or less, and still more preferably 70% by weight or less, relative to 100% by weight of the total repeating units (total monomer units) in the particulate polymer. Furthermore, the proportion of the aromatic vinyl monomer unit in the polymer of the core portion is preferably 15% by weight or more, more preferably 20% by weight or more, and particularly preferably 25% by weight or more, and is preferably 90% by weight or less, more preferably 80% by weight or less, and particularly preferably 70% by weight or less, relative to 100% by weight of the total repeating units (total monomer units) in the particulate polymer.

When the polymer of the core portion contains a (meth) acrylic acid ester monomer unit and a (meth)acrylonitrile monomer unit, from the viewpoint of more firmly bonding the battery members to each other via the adhesive layer, the proportion of the (meth) acrylic ester monomer unit in the polymer of the core portion is preferably 70% by weight or more, more preferably 80% by weight or more, and still more preferably 85% by weight or more, and is preferably 98% by weight or less, and more preferably 96% by weight or less, relative to 100% by weight of the total repeating units (total monomer units) in the particulate polymer. Furthermore, the proportion of the (meth) acrylonitrile monomer unit in the polymer of the core portion is preferably 1% by weight or more, and more preferably 1.5% by weight or more, and is preferably 10% by weight or less, and more preferably 5% by weight or less, relative to 100% by weight of the total repeating units (total monomer units) in the particulate polymer.

The polymer of the core portion may include an acid group-containing monomer unit. Examples of the acid group-containing monomer may include monomers having an acid group such as a monomer having a carboxylic acid group, a monomer having a sulfonic acid group, and a monomer having a phosphoric acid group.

Examples of the monomer having a carboxylic acid group may include a monocarboxylic acid and a dicarboxylic acid. Examples of the monocarboxylic acid may include acrylic acid, methacrylic acid, and crotonic acid. Examples of the dicarboxylic acid may include maleic acid, fumaric acid, and itaconic acid.

Examples of the monomer having a sulfonic acid group may include vinyl sulfonic acid, methyl vinyl sulfonic acid, (meth)allyl sulfonic acid, (meth)acrylic acid 2-sulfoethyl, 2-acrylamide-2-methylpropanesulfonic acid, and 3-allyloxy-2-hydroxypropanesulfonic acid.

Examples of the monomer having a phosphoric acid group may include 2-(meth)acryloyloxyethyl phosphate, methyl-2-(meth)acryloyloxyethyl phosphate, and ethyl-(meth)acryloyloxyethyl phosphate.

In the present invention, (meth)allyl means allyl and/or methallyl, and (meth)acryloyl means acryloyl and/or methacryloyl.

Among these, as the acid group-containing monomer, a monomer having a carboxylic acid group is preferable. Among these, a monocarboxylic acid is preferable, and (meth)acrylic acid is more preferable.

As the acid group-containing monomers, one type thereof may be solely used, and two or more types thereof may also be used in combination at any ratio.

The proportion of the acid group-containing monomer unit in the polymer of the core portion is preferably 0.1% by weight or more, and more preferably 1% by weight or more, and is preferably 15% by weight or less, and more preferably 10% by weight or less, relative to 100% by weight of the total repeating units (total monomer units) in the particulate polymer. By setting the proportion of the acid group-containing monomer unit to fall within the above-mentioned range, dispersibility of the polymer of the core portion can be enhanced during the preparation of the particulate polymer, and the shell portion partially covering the outer surface of the core portion can be easily formed on the outer surface of the polymer of the core portion.

The polymer of the core portion preferably contains a crosslinkable monomer unit in addition to the above-mentioned monomer unit. The crosslinkable monomer is a monomer capable of forming a crosslinked structure during or after polymerization by heating or irradiation with an energy ray.

Examples of the crosslinkable monomer may include a polyfunctional monomer having two or more polymerization reactive groups in the monomer. Examples of such polyfunctional monomers may include a divinyl monomer such as divinylbenzene, 1,3-butadiene, isoprene, and allyl methacrylate; a di(meth)acrylic acid ester monomer such as ethylene dimethacrylate, diethylene glycol dimethacrylate, ethylene glycol dimethacrylate, diethylene glycol diacrylate, and 1,3-butylene glycol diacrylate; a tri(meth)acrylic acid ester monomer such as trimethylolpropane trimethacrylate and trimethylolpropane triacrylate; an ethylenically unsaturated monomer containing an epoxy group such as allyl glycidyl ether and glycidyl methacrylate; and γ-methacryloxypropyltrimethoxysilane and N-methylol acrylamide. Among these, a di(meth)acrylic acid ester monomer is more preferable. As these monomers, one type thereof may be solely used, and two or more types thereof may also be used in combination at any ratio.

The proportion of the crosslinkable monomer unit in the polymer of the core portion is preferably 0.05% by weight or more, and more preferably 0.1% by weight or more, and is preferably 10% by weight or less, more preferably 5% by weight or less, and particularly preferably 3% by weight or less, relative to 100% by weight of the total repeating units (total monomer units) in the particulate polymer. When the proportion of the crosslinkable monomer unit falls within the above-mentioned range, the battery members can be more firmly bonded to each other via the adhesive layer.

### (Shell portion)

The glass transition temperature of the polymer of the shell portion of the particulate polymer is preferably 40°C or higher, more preferably 50°C or higher, and still more preferably 80°C or higher, and is preferably 200°C or lower, and still more preferably 120°C or lower.

When the glass transition temperature of the polymer of the shell portion is equal to or higher than the above-mentioned lower limit, formation of aggregates can be suppressed, and inkjet discharging characteristics can be further improved. On the other hand, when the glass transition temperature of the polymer of the shell portion is equal to or lower than the above-mentioned upper limit, the particulate polymer can have an appropriate level of softness, and thereby an adhesive layer that bonds the battery members to each other more firmly can be formed even by pressurization at room temperature.

The glass transition temperature of the polymer of the shell portion can be adjusted, for example, by changing the type and proportion of the monomers for use in preparing the polymer of the shell portion.

The glass transition temperature of the polymer of the shell portion is preferably higher by 25°C or more than that of the polymer of the core portion described above from the viewpoint of, after the bonding between the battery members, maintaining the shape of the particulate polymer and suppressing an increase in resistance.

Examples of the monomer for use in preparing the polymer of the shell portion may include the same monomers as those exemplified as the monomer that may be used for producing the polymer of the core portion. As these monomers, one type thereof may be solely used, and two or more types thereof may also be used in combination at any ratio.

It is preferable that, among these monomers, at least one of a (meth)acrylic acid ester monomer, an aromatic vinyl monomer, a (meth)acrylonitrile monomer, and an acid group-containing monomer is used as the monomer for use in preparing the polymer of the shell portion, from the viewpoint of more firmly bonding the battery members to each other via the adhesive layer. That is, it is preferable that the polymer of the shell portion contains at least one of a (meth)acrylic acid ester monomer unit, an aromatic vinyl monomer unit, a (meth)acrylonitrile monomer unit, and an acid group-containing monomer unit.

The proportion of the (meth)acrylic acid ester monomer unit in the polymer of the shell portion is preferably 1% by weight or more, and more preferably 1.5% by weight or more, and is preferably 10% by weight or less, and more preferably 6% by weight or less, relative to 100% by weight of the total repeating units (total monomer units) in the particulate polymer, from the viewpoint of more firmly bonding the battery members to each other via the adhesive layer.

The proportion of the aromatic vinyl monomer unit in the polymer of the shell portion is preferably 2% by weight or more, and more preferably 3% by weight or more, and is preferably 10% by weight or less, and more preferably 5% by weight or less, relative to 100% by weight of the total repeating units (total monomer units) in the particulate polymer, from the viewpoint of more firmly bonding the battery members to each other via the adhesive layer.

The proportion of the (meth)acrylonitrile monomer unit in the polymer of the shell portion is preferably 0.1% by weight or more, and more preferably 0.2% by weight or more, and is preferably 2% by weight or less, more preferably 1% by weight or less, and still more preferably 0.5% by weight or less, relative to 100% by weight of the total repeating units (total monomer units) in the particulate polymer.

The proportion of the acid group-containing monomer in the polymer of the shell portion is preferably 0.01% by weight or more, and more preferably 0.03% by weight or more, and is preferably 1% by weight or less, more preferably 0.5% by weight or less, and still more preferably 0.2% by weight or less, relative to 100% by weight of the total repeating units (total monomer units) in the particulate polymer.

### (Weight proportion of shell portion to total of core portion and shell portion)

The weight proportion of the shell portion in the total of the core portion and the shell portion of the particulate polymer is preferably 2% by weight or more, and is preferably 20% by weight or less, more preferably 15% by weight or less, still more preferably 10% by weight or less, and particularly preferably 5% by weight or less.

When the weight proportion of the shell portion is equal to or more than the above-mentioned lower limit, the inkjet discharging characteristics can be further improved. On the other hand, when the weight proportion of the shell portion is equal to or less than the above-mentioned upper limit, an adhesive layer that bonds the battery members to each other more firmly can be formed even by pressurization at room temperature.

Herein, the weight proportion of the shell portion in the total of the core portion and the shell portion is calculated from the ratio of the thicknesses of the core portion and the shell portion, which will be described later, and the specific gravity of the particulate polymer.

### (Method for preparing particulate polymer having core-shell structure)

The particulate polymer may be prepared, for example, by using a monomer for the polymer of the core portion and a monomer for the polymer of the shell portion and stepwisely polymerizing the monomers by changing the ratio of the monomers over time. Specifically, the particulate polymer may be prepared by a continuous multi-stage emulsion polymerization process and a multi-stage suspension polymerization process such that the polymer of the previous stage is coated sequentially with the polymer of the subsequent stage.

### (Particulate polymer other than particulate polymer having core-shell structure: auxiliary particulate polymer)

In addition to or in place of the particulate polymer having the core-shell structure described above, the binder composition of the present invention may contain other particulate polymers. For example, when the binder composition of the present invention contains the other particulate polymers in addition to the particulate polymer having a core-shell structure, falling of the components contained in the layer formed of the binder composition in the secondary battery from the layer can be suppressed. Such an effect is particularly advantageous when forming the adhesive layer for the secondary battery using the binder composition. Hereinafter, such a non-core-shell particulate polymer which is used supplementarily in addition to the particulate polymer having a core-shell structure is referred to as an "auxiliary particulate polymer" for the sake of distinction.

The auxiliary particulate polymer may be particles obtained by granulating only one type of polymer or particles obtained by granulating a mixture of a plurality of types of polymers. The glass transition temperature of the auxiliary particulate polymer is preferably 25°C or lower, more preferably 10°C or lower, and still more preferably 0°C or lower.

When the glass transition temperature of the polymer is 25°C or lower, falling of the components contained in the adhesive layer can be sufficiently suppressed, and the adhesion properties between the electrode members of the secondary battery can be improved.

Examples of the monomer for use in preparing the auxiliary particulate polymer may include the same monomers as the monomers exemplified as the monomers that may be used for producing the polymer of the core portion of the particulate polymer described above. For example, as the monomer for use in preparing the polymer as the auxiliary particulate polymer, a (meth)acrylic acid ester monomer, a (meth)acrylonitrile monomer, an aromatic vinyl monomer unit, an acid group-containing monomer, a (meth)acrylamide monomer, and a crosslinkable monomer may be used.

As the monomer for use in preparing the polymer as the auxiliary particulate polymer, for example, a (meth)acrylic acid ester monomer having a polar group such as 2-hydroxyethyl (meth)acrylate or 2-hydroxypropyl (meth)acrylate may also be used.

As the monomers described above, one type thereof may be solely used, and two or more types thereof may also be used in combination at any ratio.

In an embodiment, the monomer for use in preparing the polymer as the auxiliary particulate polymer may be a combination of a (meth)acrylic acid ester monomer, a (meth)acrylonitrile monomer, an acid group-containing monomer, a (meth)acrylamide monomer, and a crosslinkable monomer, or may be a combination of an aromatic vinyl monomer, an acid group-containing monomer, a (meth)acrylic acid ester monomer having a polar group, and a crosslinkable monomer. That is, the polymer as the auxiliary particulate polymer may contain a (meth)acrylic acid ester monomer unit, a (meth)acrylonitrile monomer unit, an acid group-containing monomer unit, a (meth)acrylamide monomer unit, and a crosslinkable monomer unit, or may contain an aromatic vinyl monomer unit, an acid group-containing monomer unit, a (meth)acrylic acid ester monomer unit having a polar group, and a crosslinkable monomer unit.

The proportion of the (meth)acrylic acid ester monomer unit in the polymer as the auxiliary particulate polymer is not particularly limited, and is, for example, 40% by weight or more, and may be 50% by weight or more, or 60% by weight or more, and is, for example, 90% by weight or less, and may be 85% by weight or less, relative to 100% by weight of the total repeating units (total monomer units) contained in the polymer.

The proportion of the (meth)acrylonitrile monomer unit in the polymer as the auxiliary particulate polymer is not particularly limited, and is, for example, 1% by weight or more, and may be 5% by weight or more, or 10% by weight or more, and is, for example, 20% by weight or less, and may be 15% by weight or less, relative to 100% by weight of the total repeating units (total monomer units) contained in the polymer.

The proportion of the acid group-containing monomer unit in the polymer as the auxiliary particulate polymer is not particularly limited, and is, for example, 0.5% by weight or more, and may be 1% by weight or more, or 2% by weight or more, and, for example, 10% by weight or less, and may be 7% by weight or less, or 5% by weight or less, relative to 100% by weight of the total repeating units (total monomer units) contained in the polymer.

The proportion of the (meth)acrylamide monomer unit in the polymer as the auxiliary particulate polymer is not particularly limited, and, for example, 0.1% by weight or more, and may be 0.5% by weight or more, or 1% by weight or more, and is, for example, 5% by weight or less, and may be 4% by weight or less, or 2% by weight or less, relative to 100% by weight of the total repeating units (total monomer units) contained in the polymer.

The proportion of the aromatic vinyl monomer unit in the polymer as the auxiliary particulate polymer is not particularly limited, and is, for example, 20% by weight or more, and may be 40% by weight or more, or 55% by weight or more, and is, for example, 80% by weight or less, and may be 70% by weight or less, or 65% by weight or less, relative to 100% by weight of the total repeating units (total monomer units) contained in the polymer.

The (meth)acrylic acid ester monomer unit having a polar group in the polymer as the auxiliary particulate polymer is not particularly limited, and is, for example, 0.1% by weight or more, and may be 0.5% by weight or less, and is, for example, 3% by weight or less, and may be 1.5% by weight or less, relative to 100% by weight of the total repeating units (total monomer units) contained in the polymer.

The proportion of the crosslinkable monomer unit in the polymer as the auxiliary particulate polymer is not particularly limited, and is, for example, 1% by weight or more, and may be 2% by weight or more, or 3% by weight or more, and is, for example, 50% by weight or less, and may be 40% by weight or less, or 35% by weight or less, relative to 100% by weight of the total repeating units (total monomer units) contained in the polymer.

When the polymer as the auxiliary particulate polymer contains a crosslinkable monomer unit and a (meta)acrylonitrile monomer unit, the proportion of the crosslinkable monomer unit in the polymer is not particularly limited, and is, for example, 1% by weight or more, and may be 2% by weight or more, or 3% by weight or more, and is, for example, 6% by weight or less, and may be 5% by weight or less, or 4% by weight or less, relative to 100% by weight of the total repeating units (total monomer units) contained in the polymer.

When the polymer as the auxiliary particulate polymer contains a crosslinkable monomer unit and an aromatic vinyl monomer unit, the proportion of the crosslinkable monomer unit in the polymer is not particularly limited, and is, for example, 10% by weight or more, and may be 20% by weight or more, or 30% by weight or more, and is, for example, 50% by weight or less, and may be 40% by weight or less, or 35% by weight or less, relative to 100% by weight of the total repeating units (total monomer units) contained in the polymer.

The volume-average particle diameter of the auxiliary particulate polymer is preferably 50 nm or more, more preferably 100 nm or more, still more preferably 200 nm or more, and is preferably 600 nm or less, more preferably 500 nm or less, and still more preferably 400 nm or less. When the volume-average particle diameter of the auxiliary particulate polymer falls within the above-mentioned predetermined range, the battery members can be more firmly bonded to each other via the adhesive material.

The mixing amount of the auxiliary particulate polymer is not particularly limited, and is preferably 1 part by weight or more, and more preferably 5 parts by weight or more, and is preferably 20 parts by weight or less, and more preferably 15 parts by weight or less, relative to 100 parts by weight of the particulate polymer having a core-shell structure. When the mixing amount of the auxiliary particulate polymer falls within the above-mentioned range, cycle characteristics of the secondary battery can be improved while sufficiently preventing falling of the components contained in the adhesive layer.

The mixing amount of the auxiliary particulate polymer in the binder composition is not particularly limited, and from the viewpoint of suppressing occurrence of aggregation, the preferably mixing amount is small in a degree. Specifically, the mixing amount of the auxiliary particulate polymer relative to 100% by weight of the binder composition is preferably 5% by weight or less. When the binder composition includes the auxiliary particulate polymer, the lower limit of the mixing amount thereof may be, for example, 0.2% by weight or more.

The binder composition may be free of auxiliary particulate polymers. In the case where the auxiliary particulate polymer is not contained, formation of aggregates is favorably suppressed. In addition, an increase in the internal resistance of the resulting secondary battery can be suppressed, and the cycle characteristics can be further improved.

The polymer as the auxiliary particulate polymer is not particularly limited, and may be prepared, for example, by polymerizing a monomer composition containing the above-described monomer(s) in an aqueous solvent such as water. Herein, the proportion of each monomer in the monomer composition is usually adjusted to be the same as the proportion of each monomer unit in the polymer. The polymerization method and the polymerization reaction are not particularly limited, and any publicly known polymerization methods and polymerization reactions may be used.

### (Dispersion medium)

The binder composition preferably contains water as a dispersion medium, and may further contain a dispersion medium other than water. Examples of the dispersion medium other than water may include organic solvents such as cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone and ε-caprolactone; nitriles such as acetonitrile and propionitrile; ethers such as tetrahydrofuran; and alcohols such as methanol, ethanol, and isopropanol.

### (Anti-drying agent)

When the binder composition contains an anti-drying agent, drying of the binder composition during the storing period of the binder composition in the packaged binder product can be suppressed, and formation of aggregate particles can be suppressed more favorably.

As the anti-drying agent, a low molecular weight polyhydric alcohol compound may be used. The low molecular weight polyhydric alcohol compound is a compound having a molecular weight of less than 150 and having two or more hydroxyl groups (-OH) in one molecule. When the binder composition contains a low molecular weight polyhydric alcohol compound, in addition to achieving the effect of suppressing drying of the binder composition during the storing period, discharging characteristics upon discharging of the binder composition from an inkjet head can be improved.

Examples of the low molecular weight polyhydric alcohol compound may include propylene glycol, ethylene glycol, glycerin, 1,3-propanediol, and 1,4-butanediol. Among these, glycerin is preferable. As the low molecular weight polyhydric alcohol compounds, one type thereof may be solely used, and two or more types thereof may also be used in combination at any ratio.

The containing amount of the low molecular weight polyhydric alcohol compound relative to 100 parts by weight of the particulate polymer is preferably 20 parts by weight or more, more preferably 40 parts by weight or more, still more preferably 50 parts by weight or more, and furthermore preferably 55 parts by weight or more, and is preferably 400 parts by weight or less, more preferably 300 parts by weight or less, still more preferably 250 parts by weight or less, and furthermore preferably 200 parts by weight or less.

When the containing amount of the above-mentioned low molecular weight polyhydric alcohol compound is equal to or more than the above-mentioned lower limit, formation of aggregate particles can be reduced, and inkjet discharging characteristics can be further improved. On the other hand, when the containing amount of the above-mentioned low molecular weight polyhydric alcohol compound is equal to or less than the above-mentioned upper limit, an excessive increase in viscosity of the binder composition can be suppressed, and as a result, inkjet discharging characteristics can be further improved.

The containing amount of the low molecular weight polyhydric alcohol compound relative to 100 parts by weight of water as the dispersion medium is preferably 1 part by weight or more, more preferably 2 parts by weight or more, and still more preferably 3 parts by weight or more, and is preferably 80 parts by weight or less, more preferably 50 parts by weight or less, and still more preferably 29 parts by weight or less.

When the containing amount of the above-mentioned low molecular weight polyhydric alcohol compound is equal to or more than the above-mentioned lower limit, formation of aggregate particles can be reduced, and inkjet discharging characteristics can be further improved. On the other hand, when the containing amount of the above-mentioned low molecular weight polyhydric alcohol compound is equal to or less than the above-mentioned upper limit, an excessive increase in viscosity of the binder composition can be suppressed, and as a result, inkjet discharging characteristics can be further improved.

### (Other components of binder composition)

The binder composition may include any optional component other than the components described above. For example, a dispersant (water-soluble polymer) and a dispersion stabilizer may be included for suppressing aggregation. Examples of the dispersant may include an ammonium acrylate-based polymer (for example, Aron (registered trademark) A-6114 manufactured by Toagosei Co., Ltd.).

### (Properties, etc. of binder composition)

It is preferable that the binder composition is obtained by filtering out particulate components such as coarse particles and aggregate particles for reducing the concentration thereof in a stage before filling a container with the binder composition to produce the packaged binder product of the present invention. Specifically, the concentration of the particulate components may be preferably 1000 ppm or less, more preferably 800 ppm or less, and still more preferably 500 ppm or less.

In addition, adopting the above-described configuration, the packaged binder product of the present invention can maintain the concentration of particulate components in the binder composition at a low value even after storing for a long period of time. Specifically, the concentration of particulate components in the binder composition contained in the packaged binder product stored at 5°C or higher and 40°C or lower for 6 months may be preferably 1000 ppm or lower, more preferably 800 ppm or lower, and still more preferably 500 ppm or lower.

The surface tension of the binder composition is preferably 20 to 60 mN/m from the viewpoint of facilitating handling.

### (Modifications)

The packaged binder product of the present invention is not limited to the above-described example, and may be those obtained by applying modification on the above-described examples.

For example, although FIG. 1 illustrates the container 100 including the accommodation part 110 in a generally round shape, the shape of the accommodation part is not limited thereto, and may be a square shape.

In the example illustrated in FIGS. 1 and 2, the binder composition is sucked from the upstream of the connector 150 by a pump while introducing a gas from the opening 159L of the connector to the top-portion side opening 129H of the liquid feeding adaptor 120, thereby conducting delivering of the binder composition. However, the delivery operation of the binder composition is not limited to this configuration. For example, the container 100 may have a hole communicating with the external environment of the container via a filter, instead of the gas supply hole 129 communicating with the opening of the connector 150, and outside air may be introduced therefrom. Alternatively, the delivery of the binder composition may be performed by deforming thereof by pressurizing the accommodation part 110 from the outside thereof, thereby causing the internal space 101 of the container to have a positive pressure and pumping out the binder composition. Although the through hole 121 in the liquid feeding adapter 120 in the example illustrated in FIGS. 1 and 2 is a hole with a simple shape, the shape of the through hole is not limited to this. For example, the through hole 121 may be provided with a pressure reducing valve or the like for convenience of suction by a pump.

### Examples

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure, unless otherwise specified.

### Evaluation method

### (Glass transition temperature)

An aqueous dispersion of the particulate polymer was dried at a temperature of 130°C for 1 hour to prepare a measurement sample. 10 mg of the measurement sample was placed on an aluminum pan and weighed, and the measurement was performed using a differential thermal analysis measurement device ("EXSTAR DSC6220" manufactured by SII Nanotechnology Inc.) at a rate of temperature increase of 10°C/min within a measurement temperature range of -100°C to 200°C under the conditions defined in JIS Z8703, to obtain a differential scanning calorimetry (DSC) curve. An empty aluminum pan was used as a reference for the measurement. In this temperature increase process, the glass transition temperature (°C) was determined as the intersection point between the baseline of the DSC curve immediately before the endothermic peak, where the differential signal (DDSC) is equal to or greater than 0.05 mW/min/mg, and the tangent to the DSC curve at the inflection point that first appears after the endothermic peak.

### (Volume-average particle diameter)

The volume-average particle diameter of the particulate polymer was measured by a laser diffraction method. Specifically, water was added to an aqueous dispersion solution containing the prepared particulate polymer to adjust the solid content concentration to 0.1% by weight to prepare a sample, and the particle size distribution (volume basis) was determined using a laser diffraction-type particle size distribution measuring device (product name "LS-13 320" manufactured by Beckman Coulter Inc.). In the particle size distribution, the particle diameter at which the cumulative volume calculated from the small diameter side becomes 50% was determined, and the diameter is adopted as the volume-average particle diameter D50 (nm).

### (Contact angle)

An accommodation part that is the same accommodation part 110 used in each of Examples and Comparative Examples was prepared, and cut into a flat sample. The surface corresponding to the inner wall surface 102 was made to face upward, and water and the binder composition used in each of Examples and Comparative Examples were made to drip onto the surface in order to place droplets thereon. Using a contact angle meter (product name "DMs-400" manufactured by Kyowa Interface Science Co., Ltd.), an image analysis based on a tangential method was performed on a horizontally captured image of a droplet, and a contact angle was obtained.

### (Concentration of particulate components)

A washed nylon mesh filter with an opening of 5 µm was weighed. 1 kg of the binder composition to be measured was filtered through the mesh filter, and the collected material was washed with ion-exchanged water and then dried at 80°C for 3 hours. After being dried, the mesh filter, on which the collected material remained, was weighed.

The difference between the measured weight value after the collection and the measured weight before the collection was calculated. This difference value was defined as the amount of the particulate component, and the concentration in the measurement object was calculated.

The calculated concentrations were evaluated according to the following criteria.

A: Less than 500 ppm.
B: 500 ppm or more but less than 800 ppm.
C: 800 ppm or more but less than 1000 ppm.
D: 1000 ppm or more but less than 3000 ppm.
E: 3000 ppm or higher.

### (Inkjet discharging characteristics)

In each of Examples and Comparative Examples, the binder composition sucked up from the container and transferred to the coating device was supplied to the nozzle head of a discharging experiment kit and continuously discharged. As the discharging experiment kit and the nozzle head, a discharging experiment kit (IJK-200S, manufactured by Microjet Co., Ltd.) equipped with a high-performance glass nozzle head (IJHD-100, manufactured by Microjet Co., Ltd.) was used. As the discharging conditions, the droplet volume was 100 pL and the discharging frequency was 500 kHz. The discharging characteristics were evaluated according to the following criteria.

A: In a time period from the start of continuous discharging to the time point immediately before 12 hours thereafter, the binder composition did not become incapable of performing continuous discharging.
B: In a time period from 9 hours to immediately before 12 hours after the start of continuous discharging, the binder composition became incapable of performing continuous discharging.
C: In a time period from 6 hours to immediately before 9 hours after the start of continuous discharging, the binder composition became incapable of performing continuous discharging.
D: In a time period from 3 hours to immediately before 6 hours after the start of continuous discharging, the binder composition became incapable of performing continuous discharging.
E: In a time period of less from the start of continuous discharging to the time point immediately before 3 hours thereafter, the binder composition became incapable of performing continuous discharging.

### (Dry adhesive strength)

Under the same conditions as those in each of Examples and Comparative Examples, the binder composition was supplied onto one surface of a negative electrode raw material after pressing, and a separator was further stacked thereon, and the stack was pressed at a temperature of 25°C and a pressing condition of 1 MPa for 10 seconds. Accordingly, a layered body including the negative electrode raw material, a layer of the binder composition, and the separator was obtained. The layered body was cut out to obtain a large number of elongated rectangular specimens with dimensions of 500 mm × 200 mm.

The cellophane tape was secured to a horizontal test bench with the adhesive side facing upward. The specimen was bonded to the cellophane tape with the negative electrode side facing downward. As the cellophane tape, one specified in JIS Z1522 was used. One longitudinal end of the separator was pulled vertically upward at a tension rate of 50 mm/min for peeling off, and the stress when the peeling-off occurred was measured.

This measurement was performed six times in total, and the average value of the stresses was obtained and the average value was adopted as the peel strength. The peel strength was evaluated according to the following criteria. Higher peel strength is indicative of higher dry adhesive properties between the electrode and the separator due to the dried product of the coating liquid.

A: Peel strength was 5.0 N/m or greater.
B: Peel strength was 4.0 N/m or greater and less than 5.0 N/m.
C: Peel strength was 3.0 N/m or greater and less than 4.0 N/m.
D: Peel strength was 1.0 N/m or greater and less than 3.0 N/m.
E: Peel strength was less than 1.0 N/m.

### (Cycle characteristics)

A lithium ion secondary battery prepared in each of Examples and Comparative Examples was charged to 4.3 V by a constant current-constant voltage (CC CV) method at an ambient temperature of 25°C. The charged battery was discharged to 3.0 V by a constant current method at a 0.2C rate and at a 1C rate under at an ambient temperature of - 10°C, and the capacitance was determined. Then, a discharge capacity retention rate expressed by the ratio of the capacitance (= (capacitance at 1C / capacitance at 0.2C) × 100(%)) was obtained. These measurements were performed on five lithium ion secondary batteries, and the average value of the determined discharge capacity retention rates was calculated as the output characteristics.

Subsequently, the lithium ion secondary batteries were fastened with a pressurizing jig so as to have a 1MPa surface pressure, and cycle test was performed at 45°C. In the cycle test, the charge/discharge cycle was repeated 500 times by performing CC+CV charging at a 1C rate (4.3 V, 1/50C Cut) and CC discharging at a 1C rate (3.0 V Cut). After that, the temperature was lowered to 25°C while fastening by the pressurizing jig was kept, and the output characteristics were measured in the same manner as described above. Resistance retention (%) before and after the cycle (= (average value of discharge capacity retention rate after cycle test / average value of discharge capacity retention rate before cycle test) × 100) was calculated and evaluated according to the following criteria. Larger resistance retention before and after the cycle is indicative of smaller increase in resistance in the cycle test, that is, better cycle characteristics.
A: Resistance retention was 80% or more.
B: Resistance retention was 70% or more and less than 80%.
C: Resistance retention was 60% or more and less than 70%.
D: Resistance retention was 40% or more and less than 60%.
E: Resistance retention was less than 40%.

### (Production Example 1)

To a reaction vessel equipped with a stirrer, 100 parts of ion-exchanged water and 0.1 part of ammonium persulfate were each supplied. The gas phase part was replaced with nitrogen gas and the temperature was raised to 80°C. On the other hand, in another container, 40 parts of ion-exchanged water, 0.2 part of sodium dodecylbenzene sulfonate as an emulsifier, and a monomer composition for the core portion were mixed to obtain a mixture for forming the core portion.

As the monomer composition for the core portion, a composition including 91.1 parts of n-butyl acrylate as a (meth)acrylic acid ester monomer, 1.9 parts of methacrylic acid as an acid group-containing monomer, 0.1 part of ethylene glycol dimethacrylate as a crosslinkable monomer, and 1.9 parts of acrylonitrile as a (meth)acrylonitrile monomer was used.

The mixture for forming the core portion was continuously added to the above-mentioned reaction vessel over a period of 3 hours to perform a polymerization reaction at a temperature of 80°C. The polymerization was continued until the polymerization conversion reached 95%, and as a result, an aqueous dispersion containing a particulate polymer constituting the core portion was obtained. Then, a monomer composition for the shell portion was continuously supplied to the aqueous dispersion over a period of 60 minutes, and the polymerization was continued.

As the monomer composition for the shell portion, a composition including 4.75 parts of styrene as an aromatic vinyl monomer and 0.25 part of methacrylic acid as an acid group-containing monomer was used.

The reaction was stopped by cooling when the polymerization conversion reached 98%. Thus, an aqueous dispersion containing a particulate polymer 1 was prepared. The volume-average particle diameter and the glass transition temperature of the resulting particulate polymer 1 were measured.

By observing the cross-sectional structure of the particulate polymer 1 using transmission electron microscope (TEM), it was confirmed that the particulate polymer 1 had a core-shell structure in which the shell portion partially covered the outer surface of the core portion.

### (Production Example 2)

A particulate polymer 2 was obtained and a volume average particle diameter and a glass transition temperature were measured by the same operation as that of Production Example 1, except for the following modifications.
- As the monomer composition for the core portion, a composition including 3 parts of methacrylic acid, 48 parts of 2-ethylhexyl acrylate, 43.9 parts of styrene, and 0.1 part of ethylene glycol dimethacrylate was used.
- As the monomer composition for the shell portion, a composition including 4.7 parts of styrene, 0.05 part of methacrylic acid, and 0.25 part of acrylonitrile was used.

By observing the cross-sectional structure of the particulate polymer using transmission electron microscope (TEM), it was confirmed that the particulate polymer 2 had a core-shell structure in which the shell portion partially covered the outer surface of the core portion.

### (Production Example 3)

To a reaction vessel equipped with a stirrer, 90 parts of ion-exchanged water, and 0.05 part of sodium dodecylbenzene sulfonate ("Neoperex G-15" manufactured by Kao Chemical Corp.) and 0.23 part of ammonium persulfate as emulsifiers were each supplied. The gas phase part was replaced with nitrogen gas and the temperature was raised to 70°C.

On the other hand, in another container, 50 parts of ion-exchanged water, 0.1 part of sodium dodecylbenzenesulfonate as an emulsifier, 2.3 parts of methacrylic acid as an acid group-containing monomer, 12.5 parts of acrylonitrile as a (meth)acrylonitrile monomer, 79.9 parts of n-butyl acrylate as a (meth)acrylic acid ester monomer, 3.8 parts of N-methylolacrylamide as a crosslinkable monomer, and 1.5 parts of acrylamide (AAm) as a (meth)acrylamide monomer were mixed to obtain a monomer composition. The monomer composition was continuously added to the reaction vessel over a period of 4 hours to perform polymerization. During the addition, the reaction was performed at 80°C. After completion of the addition, the mixture was stirred at 80°C for 3 hours, and then the reaction was stopped. As a result, an aqueous dispersion containing a particulate polymer 3 having no core-shell structure was prepared.

The volume-average particle diameter and the glass transition temperature of the resulting particulate polymer 3 were measured.

The summary and evaluation results of Production Examples 1 to 3 are shown in Table 1. Abbreviations in Table 1 have the following meanings.
BA: proportion of butyl acrylate (%)
MAA: proportion of methacrylic acid (%)
AN: proportion of acrylonitrile (%)
2EHA: proportion of 2-ethylhexyl acrylate (%)
St: proportion of styrene (%)
NMA: proportion of N-methylolacrylamide (%)
AAm: proportion of acrylamide (%)
EDMA: proportion of ethylene glycol dimethacrylate (%)

Proportion of shell portion: weight proportion (%) of shell portion relative to total of core portion and shell portion

### Table 1

**Table 1**

| | | | |
|---|---|---|---|
| Production Example | 1 | 2 | 3 |
| Particulate polymer No. | 1 | 2 | 3 |

| Core portion material | | | |
|---|---|---|---|
| BA | 91.1 | - | 79.9 |
| MAA | 1.9 | 3 | 2.3 |
| AN | 1.9 | - | 12.5 |
| 2EHA | - | 48 | - |
| St | - | 43.9 | - |
| NMA | - | - | 3.8 |
| Aam | - | - | 1.5 |
| EDMA | 0.1 | 0.1 | - |

| Shell portion material | | | |
|---|---|---|---|
| St | 4.75 | 4.7 | - |
| MAA | 0.25 | 0.05 | - |
| AN | - | 0.25 | - |
| Shell portion ratio | 5 | 5 | - |
| Core portion Tg(°C) | -40 | 35 | -15 |
| Shell portion Tg(°C) | 105 | 110 | - |
| Volume-average particle diameter (nm) | 250 | 500 | 200 |

### (Example 1)

### (1-1. Binder composition)

10 parts in terms of solid content of an aqueous dispersion of the particulate polymer 1 obtained in Preparation Example 1, 1 part in terms of solid content of an aqueous dispersion of the particulate polymer 3 obtained in Preparation Example 3, 10 parts of propylene glycol as an anti-drying agent, and 0.1 part in terms of solid content of an ammonium acrylate-based polymer (Aron (registered trademark) A-6114 manufactured by Toagosei Co., Ltd.) as a dispersant (water-soluble polymer) were mixed together, and further ion-exchanged water was added to adjust the concentration so that the solid content concentration became 11.1% by weight, thereby obtaining a mixture. The mixture was filtered through a mesh filter with an opening of 5 µm to obtain a binder composition.

The concentration of the particulate components of the resulting binder composition was measured and evaluated.

### (1-2. Container)

An inkjet coating device (KM1024 (shear-mode type), manufactured by Konica Co., Ltd.) equipped with a container having the structure schematically shown in FIG. 1 and a connector 150 having the structure schematically shown in FIG. 2 was prepared. The container 100 included an accommodation part 110 made of HDPE (high-density polyethylene) having an inner volume of 10 liters, a liquid feeding adaptor 120 made of HDPE, a liquid feeding pipe 130 made of HDPE, and a cap body 140. The liquid feeding adapter 120 had a structure that engages by screwing with the opening 111 of the accommodation part 110, and the liquid feeding pipe 130 had a structure that engages with the bottom-portion side opening 121L of the liquid feeding adapter 120. The cap body 140 had a structure that detachably engages by screwing with the vicinity of the top portion of the liquid feeding adapter 120. These components formed an airtight internal space 101 in the container 100.

The contact angle θ_{W} of the inner wall surface 102 of the container 100 with water and the contact angle θ_{B} thereof with the binder composition obtained in (1-1) were measured.

### (1-3. Packaged binder product)

The cap body 140 was removed from the container 100 obtained in (1-2), and the container 100 was washed, so that the inside thereof was cleaned. The internal space 101 of the container 100 was filled with 9 liters of the binder composition obtained in (1-1) immediately after filtration, and the cap body 140 was screwed again to seal the container 100, thereby obtaining a packaged binder product.

The resulting packaged binder product was stored in a room for 6 months. The room temperature during the storage period ranged from 5 to 40°C.

After the end of the storage period, the cap body 140 was removed from the container 100, a part of the binder composition was sampled, and the concentration of particulate components was measured and evaluated.

The connector 150 of the coating device was connected to the liquid feeding adapter 120 of the container 100, and the binder composition was sucked up from the container 100 by a liquid feeding pump of the coating device and fed to the coating device. At the time of sucking, clean air having a coarse particle content proportion of about 2,000 particles/m³ was also fed into the container through the opening 159L of the connector 150.

The binder composition that reached the inside of the coating device was sampled, and the concentration of particulate components was measured and evaluated.

### (1-4. Preparation of negative electrode raw material)

Into a 5-MPa pressure resistant container equipped with a stirrer, 33 parts of 1,3-butadiene, 3.5 parts of itaconic acid, 63.5 parts of styrene, 0.4 part of sodium dodecylbenzenesulfonate as an emulsifier, 150 parts of ion-exchanged water, and 0.5 part of potassium persulfate as a polymerization initiator were charged. The mixture was sufficiently stirred, and then heated to 50°C to initiate polymerization. The reaction was stopped by cooling when the polymerization conversion reached 96%, thereby obtaining a mixture containing a binder (SBR) for a negative electrode mixture layer. A 5% aqueous sodium hydroxide solution was added to the above-mentioned mixture containing the binder for a negative electrode mixture layer to adjust its pH to 8, and the unreacted monomers were removed by heat and vacuum distillation. After that, the mixture was cooled to a temperature of 30°C or lower to obtain an aqueous dispersion containing the desired binder for a negative electrode mixture layer.

Subsequently, 100 parts of artificial graphite (volume-average particle diameter: 15.6 µm) as a negative electrode active material, 1 part in terms of solid content of a 2% aqueous solution of carboxymethylcellulose sodium salt (product name "MAC350HC" manufactured by Nippon Paper Industries Co., Ltd.), as a viscosity adjuster, and ion-exchanged water were mixed to adjust the solid content concentration to 68%, and then further mixed at 25°C for 60 minutes. The solid content concentration was adjusted to 62% with ion-exchanged water, and then the mixture was further mixed at a temperature of 25°C for 15 minutes. To the resulting mixed liquid, 1.5 parts in terms of solid content of an aqueous dispersion containing the above-mentioned binder for a negative electrode mixture layer and ion-exchanged water were added to thereby adjusting the final solid content concentration to 52%. The mixed liquid was mixed for additional 10 minutes. This mixed liquid was subjected to a defoaming treatment under reduced pressure to obtain a slurry composition for a nonaqueous secondary battery negative electrode having good fluidity.

The resulting slurry composition for a nonaqueous secondary battery negative electrode was applied by a comma coater onto both surfaces of a long-length copper foil having a thickness of 20 µm, which served as a current collector, so that the film thickness after drying was about 150 µm, and then dried. The drying was performed by conveying the copper foil at a rate of 0.5 m/min in an oven at 60°C for 2 minutes. After that, heat treatment was performed at a temperature of 120°C for 2 minutes to obtain a negative electrode raw material before pressing. The negative electrode raw material before pressing was rolled using a roll press to obtain a negative electrode raw material after pressing with a thickness of the negative electrode mixture layer of 80 µm.

### (1-5. Preparation of positive electrode raw material)

100 parts of LiCoO₂ having a volume-average particle diameter of 12 µm as a positive electrode active material, 2 parts of acetylene black (product name "HS-100" manufactured by Denka Co., Ltd.) as an electroconductive material, 2 parts in terms of solid content of polyvinylidene fluoride (product name "#7208" manufactured by Kreha Corp.) as a binder, and N-methylpyrrolidone as a solvent were mixed, to adjust a total solid content concentration to 70%. These were mixed by a planetary mixer to obtain a slurry composition for a nonaqueous secondary battery positive electrode.

The resulting slurry composition for a nonaqueous secondary battery positive electrode was applied by a comma coater onto both surfaces of a long-length aluminum foil having a thickness of 20 µm, which served as a current collector, so that the film thickness after drying was about 150 µm, and then dried. The drying was performed by conveying the aluminum foil at a rate of 0.5 m/min in an oven at 60°C for 2 minutes. After that, heat treatment was performed at a temperature of 120°C for 2 minutes to obtain a positive electrode raw material.

Then, the resulting positive electrode raw material was rolled using a roll press machine to obtain a positive electrode raw material after pressing including a positive electrode mixture layer. After the pressing, the positive electrode raw material was cut into a rectangular shape.

### (1-6. Separator raw material)

A long-length separator raw material made of polyethylene (PE) (product name "ND412" manufactured by Asahi Kasei Corp.) was prepared.

### (1-7. Layered body for nonaqueous secondary battery)

The negative electrode raw material after pressing obtained in (1-4) was conveyed at a rate of 10 m/min, and the binder composition was supplied onto one surface of the negative electrode raw material. Then, the separator raw material of (1-6) was further stacked thereon as a first separator raw material and bonded using a pressure-bonding roller. The supply of the binder composition was performed by discharging, from the inkjet head of the coating device, the binder composition that has been sucked from the container to the coating device in (1-3).

Subsequently, the binder composition was supplied from another coating device to the other surface of the negative electrode raw material in the same manner as described above. Another separator raw material of (1-6) was further stacked thereon as a second separator raw material, and bonded using a pressure-bonding roller to obtain a layered body (a) having a layer configuration of (first separator raw material) / (binder composition layer) / (negative electrode raw material) / (binder composition layer) / (second separator raw material).

On the surface of the layered body (a) on the first separator raw material side, the binder composition was supplied from another coating device in the same manner as described above, and a rectangular positive electrode raw material was further stacked thereon and bonded by a pressure-bonding roller to obtain a layered body (b) having a layer configuration of (rectangular positive electrode) / (binder composition layer) / (first separator raw material) / (binder composition layer) / (negative electrode raw material) / (binder composition layer)/ (second separator raw material).

Subsequently, the binder composition was supplied from another coating device to the surface of the layered body (b) on the positive electrode side in the same manner as described above, and the layered body (b) was cut. As a result, a rectangular layered body (c) was obtained, which had a layer configuration of (binder composition layer) / (rectangular positive electrode) / (binder composition layer) / (first separator) / (binder composition layer) / (negative electrode) / (binder composition layer)/ (second separator).

By making the shape of the application of the slurry composition and the shape of the cutting appropriate, a portion where the electrode mixture layer (positive electrode mixture layer or negative electrode mixture layer) was not formed was provided at the end portion of the current collector of each of the positive electrode and the negative electrode of the layered body (c), so that a tab of a desired size was formed. The positive electrode and negative electrode tabs were disposed to extend from the same edge side of the rectangular layered body (c).

The bonding using the pressure-bonding roller described above was performed at a temperature of 25°C and a pressure of 2 MPa. By using a heat roller as a conveying roller for conveying the layered body in the conveying path of the long-length layered body immediately after each pressure-bonding, drying of the binder composition layer was performed at a drying temperature of 70°C for 1 second as drying time.

Each supply of the binder composition was performed so that the binder composition had a uniform dot-shaped pattern. The dot size was 100 µm in diameter and the spacing was 400 µm pitch. The unit amount (dry weight per unit area) of the binder composition was 0.2 g/m².

### (1-8. Secondary battery)

Five pieces of the layered bodies (c) prepared in (1-7) were stacked and pressed at a temperature of 25°C and a pressure of 2 MPa for 10 seconds to obtain a layered body (d). The layered body (d) was wrapped with an aluminum packaging material as an outer package, and an electrolyte solution (solvent: ethylene carbonate / diethyl carbonate / vinylene carbonate = 68.5/30/1.5 (volume ratio), electrolyte: LiPF₆ at a concentration of 1 M) was poured into the outer package. After that, the opening of the outer package was closed by heat sealing at a temperature of 150°C, and as a result, a multilayer lithium ion secondary battery having a battery capacity of 800 mAh was prepared. The cycle characteristics were evaluated using the resulting secondary battery.

### (Example 2)

A packaged binder product was obtained and evaluated by the same operation as that in Example 1 except that, in the preparation of the binder composition in (1-1), the particulate polymer 2 obtained in Production Example 2 was used instead of the particulate polymer 1.

### (Example 3)

A packaged binder product was obtained and evaluated by the same operation as that in Example 1 except that, in the preparation of the binder composition in (1-1), the proportion of the particulate polymer 3 was changed from 10 parts to 5 parts, the proportion of the dispersant (water-soluble polymer) was changed from 0.1 part to 0.05 part, and the concentration was adjusted so that the total concentration of the particulate polymers 1 and 3 became 10.5%.

### (Example 4)

A packaged binder product was obtained and evaluated by the same operation as that in Example 1 except that, instead of the accommodation part 110 of the container 100 made of HDPE used in Example 1, one having the same shape but made of polyethylene terephthalate was used.

### (Example 5)

A packaged binder product was obtained and evaluated by the same operation as that in Example 1 except that, in the preparation of the binder composition in (1-1), the mixture obtained by mixing the respective components was used as it was without filtration as the binder composition.

### (Example 6)

A packaged binder product was obtained and evaluated by the same operation as that in Example 1 except that, in the preparation of the binder composition in (1-1), the addition of the aqueous dispersion of the particulate polymer 3 was not performed, and concentration adjustment was performed so that the solid content concentration became 10.1% by weight.

### (Comparative Example 1)

A packaged binder product was obtained and evaluated by the same operation as that in Example 1 except for the following modifications.
- In the preparation of the binder composition in (1-1), the proportion of the dispersant (water-soluble polymer) was changed from 0.1 part to 0.5 part.
- Instead of the accommodation part 110 of the container 100 made of HDPE used in Example 1, one having the same shape but made of polyethylene terephthalate was used .

### (Comparative Example 2)

A packaged binder product was obtained and evaluated by the same operation as that in Example 1 except for the following modifications.
- In (1-2), the liquid feeding adapter 120 and the liquid feeding pipe 130 were not used, and a container having a structure in which the opening 111 of the accommodation part 110 was closed by a cap body was used.
- Upon feeding of the binder composition from the packaged binder product in (1-3), the cap body was removed to open the opening, and a tube was inserted therefrom. Then, the binder composition was sucked up by the liquid feeding pump of the coating device using the tube.

Summary and results of Examples and Comparative Examples are shown in Table 2.

**Table 2**

| | Ex. | | | | | | Comp. Ex. | |
|---|---|---|---|---|---|---|---|---|
| | 1 | 2 | 3 | 4 | 5 | 6 | 1 | 2 |
| First particulate polymer type | Parti culate poly mer 1 | Parti culate poly mer 2 | Parti culate poly mer 1 | Parti culate poly mer 1 | Parti culate poly mer 1 | Parti culate poly mer 1 | Parti culate poly mer 1 | Parti culate poly mer 1 |
| Solid content amount (wt part) | 10 | 10 | 10 | 10 | 10 | 10 | 10 | 10 |
| Second particulate polymer type | Parti culate poly mer 3 | Parti culate poly mer 3 | Parti culate poly mer 3 | Parti culate poly mer 3 | Parti culate poly mer 3 | - | Parti culate poly mer 3 | Parti culate poly mer 3 |
| Solid content amout (wt part) | 1 | 1 | 0.5 | 1 | 1 | - | 1 | 1 |
| Anti-drying agent amount (wt part) | 10 | 10 | 10 | 10 | 10 | 10 | 10 | 10 |
| disper sant amount (wt part) | 0.1 | 0.1 | 0.05 | 0.1 | 0.1 | 0.1 | 0.5 | 0.1 |
| Container material | HDPE | HDPE | HDPE | PET | HDPE | HDPE | PET | HDPE |
| Liquid feeding tube connected to liquid feeding adapter | Yes | Yes | Yes | Yes | Yes | Yes | Yes | No |
| θW(°) | 110 | 110 | 110 | 70 | 110 | 110 | 70 | 110 |
| θB(°) | 70 | 70 | 70 | 35 | 70 | 70 | 20 | 70 |
| Particulate components before storage | A | A | A | A | B | A | A | A |
| Particulate components after storage | A | A | B | C | D | A | E | A |
| Particulate components sampled from coating device | A | A | A | A | A | A | A | E |
| Inkjet discharging characteristics | A | A | B | C | D | A | E | E |
| Dry adhesive properties | A | A | B | B | C | B | E | D |
| Cycle characteristics | A | A | A | B | C | A | D | E |

100: container
101: container internal space
102: inner wall surface
110: accommodation part
111: opening
120: liquid feeding adapter
121: through hole
121H: top-portion opening
121L: bottom-portion side opening
122: recess
123: connector engagement portion
129: gas supply hole
129H: top-portion side opening
129L: bottom-portion side opening
130: liquid feeding pipe
131H: top-portion side end
131L: bottom-portion side end
140: cap body
150: connector
153: connection portion
151L: opening
159L: opening
191: threaded portion
192: threaded portion

## Claims

1. A packaged binder product comprising a container, and a binder composition for a secondary battery accommodated in an internal space of the container, wherein:
the container includes an accommodation part, a liquid feeding adapter, a liquid feeding pipe, and a cap body;
the accommodation part has an opening at a top portion thereof;
the liquid feeding adapter is disposed to engage with the opening of the accommodation part;
the liquid feeding pipe has a bottom-portion side end that is in a proximity of a bottom of the internal space of the container, and a top-portion side end that engages with the liquid feeding adaptor;
the liquid feeding adaptor and the liquid feeding pipe constitute a liquid delivery path that allows opening on the bottom-portion side end of the liquid feeding pipe to communicate with a top-portion side of the container;
the cap body is disposed to detachably engage with the liquid feeding adapter to seal the liquid delivery path; and
a contact angle θ_{B} between the binder composition and an inner wall surface of the container is equal to or greater than 30°.

2. The packaged binder product according to claim 1, wherein the liquid feeding adapter includes an engagement portion that is capable of being connected to a connector configured for delivering the binder composition to outside of the container.

3. The packaged binder product according to claim 1 or 2, wherein the binder composition includes a particulate polymer having a glass transition temperature of 40°C or higher and 200°C or lower.

4. The packaged binder product according to claim 1 or 2, wherein the binder composition includes a particulate polymer that has a core-shell structure including a core portion and a shell portion covering an outer surface of the core portion, and the shell portion has a glass transition temperature of 40°C or higher and 200°C or lower.

5. The packaged binder product according to claim 4, wherein the binder composition further includes an auxiliary particulate polymer that is a non-core-shell particulate polymer, and a content of the auxiliary particulate polymer is 5% by weight or less relative to 100% by weight of the binder composition.

6. The packaged binder product according to claim 1 or 2, wherein the binder composition includes a particulate polymer that is composed of only a particulate polymer having a core-shell structure including a core portion and a shell portion covering an outer surface of the core portion.

7. The packaged binder product according to claim 1 or 2, wherein the binder composition includes a particulate polymer, an anti-drying agent, and water, and a contact angle θ_{W} between an inner wall surface of the container and water is 80° or more.

8. The packaged binder product according to claim 1 or 2, wherein a concentration of particulate components in the binder composition contained in the packaged binder product stored at 5°C or higher and 40°C or lower for 6 months is 1000 ppm or lower, the particulate components having a spherical volume equivalent diameter of 5 µm or more.
